Europäisches Patentamt

European Patent Office

Office européen des brevets

(11) Publication number: **0 080 372**
**A2**

(19)

(12) **EUROPEAN PATENT APPLICATION**

(21) Application number: **82306236.9**

(22) Date of filing: **23.11.82**

(51) Int. Cl.³: **C 01 B 25/46**

(30) Priority: **23.11.81 US 323517**

(43) Date of publication of application: **01.06.83**
**Bulletin 83/22**

(84) Designated Contracting States: **BE DE FR GB IT NL**

(71) Applicant: **MOBIL OIL CORPORATION, 150 East 42nd Street, New York New York 10017 (US)**

(72) Inventor: **Johnston, Byron Everett, 923 Route No. 13, Skillman New Jersey 08558 (US)**
Inventor: **Schlinger, Robin, 9-03 Hunters Glen Drive, Plainsboro New Jersey 08536 (US)**
Inventor: **Grotyohann, Richard George, 94 Walnut Avenue, Somerset New Jersey (US)**

(74) Representative: **West, Alan Harry et al, Mobil Court 3 Clements Inn, London WC2A 2EB (GB)**

(54) **Process for removal of residual organic matter and color from purified phosphoric acid.**

(57) This invention provides a process for removal of residual organic matter and color from purified wet process phosphoric acid that comprises contacting the purified phosphoric acid with hydrogen peroxide at a temperature between 100°C and 150°C, for between $^1/_4$ hour and 4 hours, and using a weight ratio of hydrogen peroxide to phosphoric acid between 0.001 and 0.05.

EP 0 080 372 A2

## PROCESS FOR REMOVAL OF RESIDUAL ORGANIC MATTER
## AND COLOR FROM PURIFIED PHOSPHORIC ACID

This invention is concerned with the removal of residual organic matter and color from purified wet process phosphoric acid.

Insofar as is now known, the process of this invention has not been proposed.

This invention provides a process for removal of residual organic matter and color from purified wet process phosphoric acid that comprises contacting the purified phosphoric acid with hydrogen peroxide at a temperature between 100°C. and 150°C., for between 1/4 hour and 4 hours, and using a weight ratio of hydrogen peroxide to phosphoric acid between 0.001 and 0.05.

The phosphoric acid that is treated in the process of this invention is purified phosphoric acid, i.e., "food grade" phosphoric acid. This is derived from black wet process phosphoric acid. Generally, the black acid is separated from solids present and then purified by solvent extraction. Wet process phosphoric acid which has been purified by solvent extraction typically contains residual organic impurities. These impurities include organics present in the crude phosphoric acid and possibly residual solvent. If a volatile solvent is used, such as isopropyl alcohol, the residual solvent can be removed by distillation or steam stripping. The residual organic matter derived from the crude phosphoric acid, on the other hand, has a low volatility and cannot readily be removed by distillation or steam stripping.

In accordance with this invention, purified phosphoric acid is treated with hydrogen peroxide under specific reaction conditions to effect the desired reduction in organic impurity level. The hydrogen peroxide used has a concentration of 30-70% by weight in water. The weight ratio of $H_2O_2$ to phosphoric acid in the process feed will be between 0.001 and 0.05.

The phosphoric acid and hydrogen peroxide are contacted at a temperature between 100°C. and 150°C., preferably between 120°C. and 135°C. The contact time will be between 1/4 hour and 4 hours. The process can be carried out continuously to achieve fast and economic treatment. Treatments are carried out in an agitated reaction vessel.

The APHA (American Public Health Association) color scale measurement is described in the American Public Health Association publication, Standard Methods for the Examination of Water and Sewage, 14th Edition, p. 64. ASTM adopted this method as ASTM Designation D 1209 and indicates in their method that the methods are identical. ASTM refers to the color rating as a platinum-cobalt standard number, rather than APHA.

### Example I

A 50 ml. portion of a purified 75% phosphoric acid was heated to 125°C. in an agitated round bottom flask. A 2.0 ml. portion of 30% hydrogen peroxide was added and allowed to react at 125-130°C. for 50 minutes. The total organic level (TOC) was reduced from 75mg. carbon/kg. acid to 28 mg./kg.

### EXAMPLE II

A 50 ml. portion of a purified 80% phosphoric acid was treated in a similar manner to Example 1. The TOC level was reduced from 95 mg./kg. to 38 mg./kg.

### EXAMPLE III

A 150g. portion of a purified 75% phosphoric acid was mixed with aqueous hydrogen peroxide in a stirred flask at a $H_2O_2$/75% phosphoric acid weight ratio of 0.038/1. The reaction mixture was heated to 120°C. and held at 120-127°C. for 45 minutes. The TOC was reduced from 117 mg./kg. to 16 mg./kg.

### EXAMPLE IV

A 50g. portion of a purified 80% phosphoric acid was mixed with aqueous hydrogen peroxide in a stirred flask at a $H_2O_2$/80% phosphoric acid ratio of 0.01/1. The reaction mixture was heated to 135°C. and held at this temperature for 30 minutes. The TOC was reduced from 213 mg./kg. to 104 mg./kg.

EXAMPLE V

A 75% purified phosphoric acid was treated with hydrogen peroxide in a continuous flow, agitated 5-liter reactor at 120°C. The average residence time for the phosphoric acid was 2.0 hours. The weight ratio of $H_2O_2$/75% phosphoric acid in tne feed was 0.002. The TOC was reduced from 82 mg./kg. to 17 mg./kg. The color of the acid was reduced from 25 APHA to 10 APHA.

EXAMPLE VI

A 70% purified phosphoric acid was treated with hydrogen peroxide in a manner similar to Example 5. The TOC was reduced from 92 mg./kg. to 40 mg./kg. The color was reduced from 140 APHA to 15 APHA.

Although the present invention has been described with preferred embodiments, it is to be understood that modifications and variations may be resorted to, without departing from the spirit and scope of this invention, as those skilled in the art will readily understand. Such modifications and variations are considered to be within the purview and scope of the appended claims.

F-1371                          -4-

WHAT IS CLAIMED IS:

1. A process for removal of residual organic matter and color from purified wet process phosphoric acid that comprises contacting the purified phosphoric acid with hydrogen peroxide at a temperature between 100°C. and 150°C., for between 1/4 hour and 4 hours, and using a weight ratio of hydrogen peroxide to phosphoric acid between 0.001 and 0.05.

2. The process of Claim 1, wherein the temperature is between 120°C. and 135°C.

3. The process of Claim 1 or 2, wherein the process is carried out continuously.